Europäisches Patentamt

European Patent Office

Office européen des brevets

(19)

(11) Publication number: 0 124 373
A2

# (12) EUROPEAN PATENT APPLICATION

(21) Application number: 84302872.1

(22) Date of filing: 27.04.84

(51) Int. Cl.³: B 60 J 5/04

(30) Priority: 28.04.83 JP 73745/83
28.04.83 JP 73747/83
28.04.83 JP 73748/83
26.10.83 JP 199290/83
28.04.83 JP 63055/83
26.10.83 JP 164648/83

(43) Date of publication of application: 07.11.84
Bulletin 84/45

(84) Designated Contracting States: DE FR GB IT

(71) Applicant: HONDA GIKEN KOGYO KABUSHIKI KAISHA,
27-8, Jingumae, 6-chome, Shibuya-ku, Tokyo 150 (JP)

(72) Inventor: Irimajiri, Shoichiro, 1-8-5, Kobe Suzuka-shi, Mie
(JP)
Inventor: Komuro, Katsusuke, 1-21-3, Wakaba-cho,
Chofu-shi Tokyo (JP)
Inventor: Aikawa, Kunihiko, 3-17-16, Chuo-cho
Higashikurume-shi, Tokyo (JP)

(74) Representative: Leale, Robin George et al, FRANK B.
DEHN & CO. Imperial House 15-19 Kingsway, London
WC2B 6UZ (GB)

(54) Door assembly for vehicles.

(57) A door assembly, upwardly pivotable, for a vehicle including a vehicle body (1) having a cockpit (4), comprising as an integral part thereof a windshield (9) covering the cockpit from the front to the upper rear thereof and as another integral part thereof a wiping mechanism (10) for wiping the windshield.

A door assembly for a vehicle including a pair of front road wheels (5), a single rear road wheel (6), and a driver's seat (30) disposed in a cockpit (4), wherein the door assembly is vertically pivotable about a hinge shaft (51) disposed at one side of the vehicle body to provide a step way at the opposite side thereof, has at the above-mentioned opposite side of the vehicle body a bulged portion (7) bulged transversely and configured to be continuous with one of front fender portions (3) when the door assembly is closed, and is provided with a side sill (19) disposed at the above-mentioned opposite side of the cockpit so as to engagingly about on a lower edge part at the cockpit side of the bulged portion, the side sill being disposed substantially right under a side edge part at the of the driver's seat.

ACTORUM AG

## DOOR ASSEMBLY FOR VEHICLES

The present invention relates to a door assembly hinged to be upwardly openable and adapted for vehicles of the type which includes a vehicle body having a cockpit.

In the art such as of an aeroplane and a racing car, there are known various vehicles of the type in which a cockpit is covered with a windshield configured substantially in the fusiform to improve the aerodynamic characteristic without marring the sight of a driver in the cockpit.

However, in the case in which such windshield is adapted as a door assembly longitudinally slidable to open and close or, as proposed by Taylor in U. S. Patent No. 2,177,793 for example, hinged at either side of the vehicle so as to be vertically pivotable thereabout to open and close, the cockpit is to have an open area formed thereabove needing the driver to step over the boundary thereof by a relatively large stride when getting on and off the vehicle, thus unsuccesfully facilitating the driver's action to get on and off the vehicle, giving rise to the problem how to effect the facilitation of such driver's action. Besides, there is left the difficulty to device the arrangement of a wiping mechanism which becomes necessary for wiping the windshield.

In this respect, in conventional ordinary vehicles having a front windshield supported along the lower edge thereof by a vehicle body, a wiper arm is pivoted at the proximal end thereof on a part of the vehicle body near the lower edge of the windshield so as to be pivotable to the left and right about an axis substantially perpendicular to the outer surface of the windshield, while on account of the upwardly extending position of the windshield as well as the small surface curvature thereof the wiper arm is not needed to so much change the angle it makes with the axis of pivotal motion thereof, thus permitting a wiper blade to be held in close contact with the surface of the windshield, thereby achieving sufficient wipability.

However, when such conventional wiping mechanism is applied to a substantially fusiform windshield, the angle the wiper arm makes with the pivot axis thereof as well as the contact area the wiper blade has with the windshield is to considerably vary as the pivoting angle of the wiper arm changes, thus resulting in the difficulty to firmly wipe off water drops on the outer surface of the windshield.

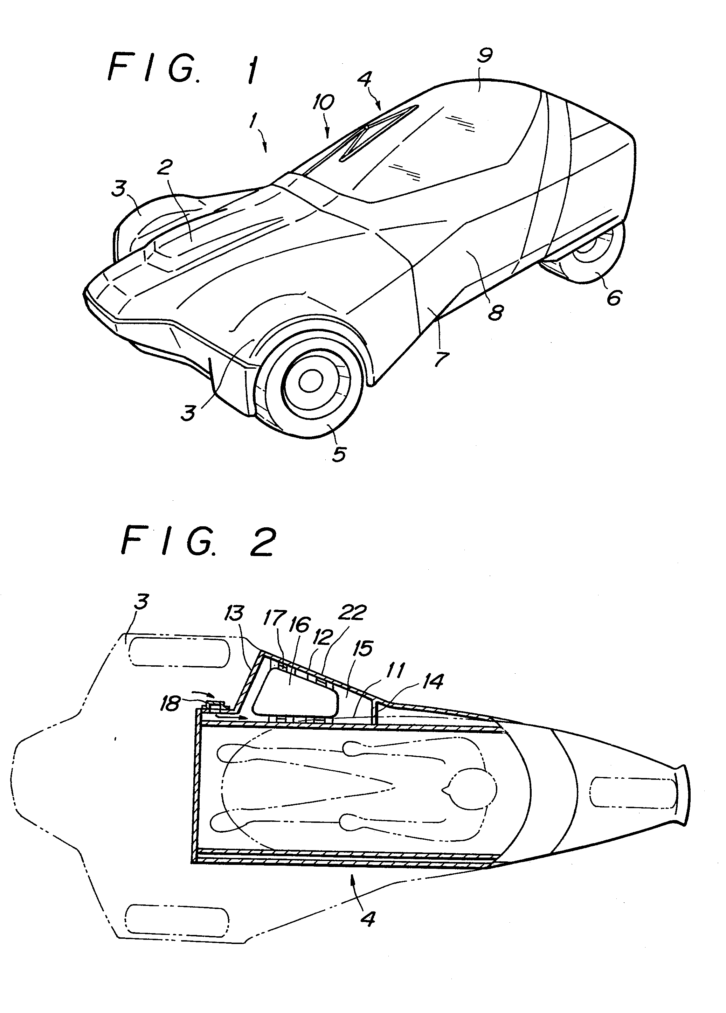

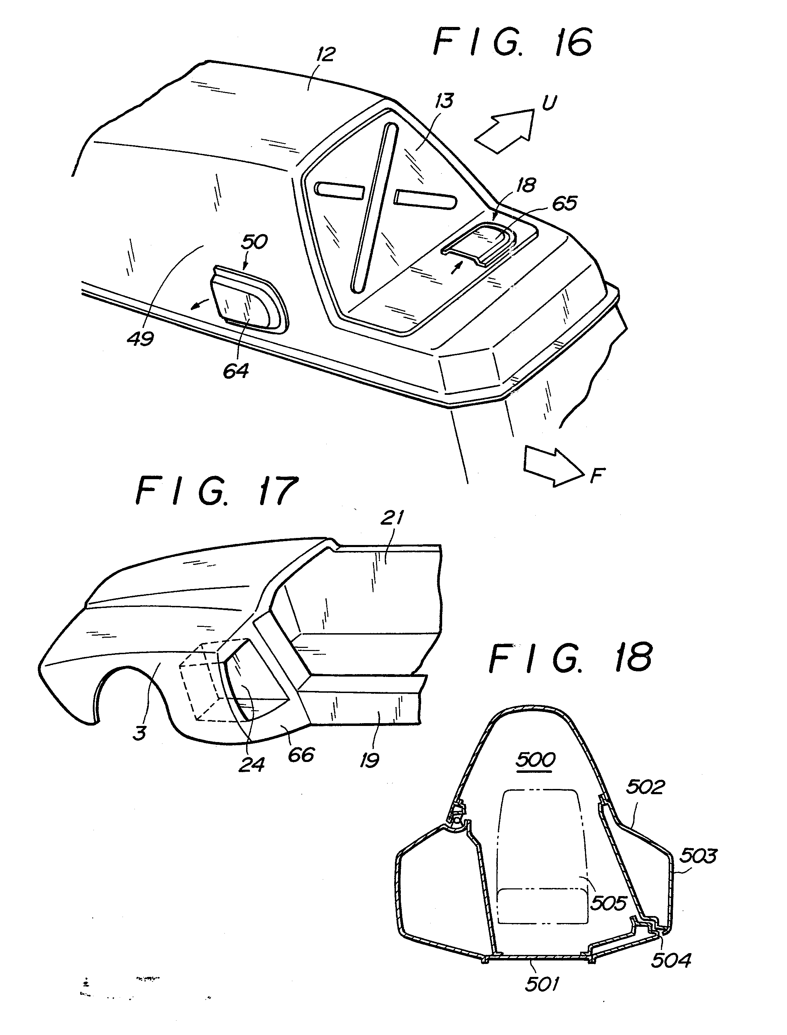

On the other hand, in the case in which a vehicle having a pair of front road wheels and a single rear road wheel is to be provided with a door assembly adapted for and in consideration of the security of the driver's sight and the betterment of the aerodynamic characteristic as well as the facilitation of the driver's action to get on and off the vehicle, there may be employed an arrangement in which, as shown in Fig. 1 illustrating a preferred embodiment of the present invention, such door assembly is hinged at either lateral side of a vehicle body so as to be pivotable about a hinge shaft extending longitudinally of the vehicle, while the vehicle body has at the opposite side thereof a step way adapted to get on and off the vehicle for the driver in a cockpit located substantially in the longitudinally central part of the vehicle body. In such case, from an aerodymanic viewpoint, the door assembly may have a transversely bulged portion so configured as to be continuous with one of a pair of front fenders respectively bulged transversely of the vehicle to hang over the two front wheels, while the lower edge of the bulged portion of the door assembly may have such a positional relation that is shown in Fig. 18, which is a cross-sectional view of a cockpit, with a side sill disposed alongside the edge of a floor of the cockpit and adapted to directly support the lower edge of the door assembly.

In the arrangement of Fig. 18, a door assembly 502 has a transversely bulged portion 503 engaged at the lowre edge thereof with a side sill 504. The side sill 504 is provided on a floor 501 of a cockpit 500, while the floor 501 is transversely extended by dimensions corresponding to the bulged width of the bulged portion 503. Accordingly, the distance from the side sill 504 to a driver's seat 505, i.e. between the the side edge of the floor 501 and the driver's seat 505, is set to be relatively large, thus failing to effectively facilitate the driver's action to get on and off the vehicle.

Moreover, notwithstanding the arrangement of Fig. 18, for a door assembly of an upwardly pivotable type, the side sill may be disposed slightly above the floor level of a cockpit, while extening longitudinally of the vehicle substantially with an even height, as generally observed in the art. For such side sill, however, in the case in which the height is determined so as not to obstruct the driver's action to get on and off the vehicle, the rigidity of the side part of the vehicle body may not always be sufficient. Further, in the case in which the upper and lower widths of such side sill are increased to achieve a favorable rigidity at the side part of the vehicle body, such increase may obstruct the driver's action to get on and off the vehicle. Furthermore, in the case in which, to overcome such obstruction, such side sill is partially cut away to render the level at such cut part lower than the remaining part, the side sill becomes discontinuous at the cut part, thus marring the appearence of the vehicle.

Still more, a windshield of a door assembly of such upwardly pivotable type may have an interior light arranged at the cockpit side of the top part thereof for the illumination of both cockpit and step way, as well known in the art of conventional ordinary vehicle. In such case, however, the interior light can be seen from outside of the vehicle, thus marring the appearence. Moreover, when the door assembly is opened upwardly, the top part of the windshield moves to the opposite side of the vehicle body, while leaning sidewardly, thus failing to sufficiently light up both the cockpit and the stepway.

Yet more, in a vehicle equipped with such upwardly pivotable door assembly, differently from conventional ordinary vehicles, no door hinge is needed to be disposed in such an area that interferes with the inner space of the front fender, i.e., in the rear part of the front fender, thus giving rise to a desideratum for effective use of such space.

The present invention has been achieved to overcome such problems or substantiate such desiderata attendant conventional door assembly of an upwardly pivotable type.

According to the present invention, there is provided a door assembly, upwardly pivotable, for a vehicle including a vehicle body having a cockpit, comprising as an integral part thereof a windshield covering the cockpit from the front to the upper rear thereof and as another integral part thereof a wiping mechanism for wiping the windshield. The windshield may have a substantially fusiform configuration with the axis of symmetry thereof extending longitudinally of the vehicle. The door assembly may be pivotable about a hinge shaft arranged longitudinally at one side of the vehicle body to provide a step way at the other side thereof. The wiping mechanism may comprise a wiper motor disposed inside of a front end portion of the door assembly, a wiper pivot shaft operatively connected to the wiper motor and frontwardly projected at least at the front end thereof from the front end portion of the door assembly, and a wiper blade mechanism operatively jointed with the front end of the wiper pivot shaft. The wiper pivot shaft may be arranged to be substantially coincident with the axis of symmetry of the windshield, and the wiper blade mechanism may comprise a wiper arm attached at one end thereof substantially perpendicularly to the wiper pivot shaft, the wiper arm having a length substantially equal to the maximum distance between the windshield and the axis of symmetry thereof, and a wiper blade member pivoted on the other end of the wiper arm so as to be pivotable in a plane including the wiper arm and extending longitudinally of the vehicle.

Further, according to the present invention, there is provided a gall-wing door assembly for a vehicle including a vehicle body, a pair of front road wheels suspended from the front part of the vehicle body, and a single rear road wheel suspended from the rear part of the vehicle body, the vehicle body having a pair of front fender portions each respectively bulged transversely of the vehicle to hang over one of the front road wheels, a cockpit located substantially in the longitudinally central part thereof, the cockpit being provided with a floor portion, and a driver's seat disposed in the cockpit and given a predetermined transverse width, wherein the door assembly is adapted to cover the cockpit and to be vertically pivotable about a hinge shaft directed longitudinally and disposed at one side of the vehicle body to provide a step way at the opposite side thereof, the door assembly has at the above-mentioned opposite side of the vehicle body a bulged portion bulged transversely and configured to be continuous with one of the front fender portions when the door assembly is closed, the door assembly is provided with a side sill disposed at the above-mentioned opposite side of the floor portion of the cockpit so as to engagingly abut on a lower edge part at the cockpit side of the bulged portion, and the side sill is disposed substantially right under a side edge part at the above-mentioned opposite side of the driver's seat. The side sill may be arranged to be slightly higher at the front end thereof than the upper surface of the floor portion and configured so as to gradually ascend rearwardly of the vehicle. The hinge shaft of the door assembly may comprise a shaft member inserted between a part of the door assembly and a part of the vehicle body so as to be removable from inside of the cockpit.

Accordingly, an object of the present invention is to provide a door assembly for vehicles, which is upwardly pivotable and has achieved a favorable arrangement of a wiping mechanism.

Another object of the present invention is to provide a door assembly for vehicles, which is provided with a wiping mechanism for firmly wiping the outer surface of a windshield attached to the door assembly.

Still another object of the present invention is to ptovide a door assembly for vehicles, which is upwardly pivotable and favorably facilitates the driver's action to get in and off the vehicle.

Yet another object of the present invention is to provide a door assembly for vehicles, which is upwardly pivotable and permits the side part of a vehicle body to be favorably rigid.

The above and further features, objects and advantages of the present invention will more fully appear from the following detailed description of the preferred embodiment of the invention when the same is read in conjunction with the accompanying drawings, in which:

Fig. 1 is a perspective view of the whole part of a vehicle equipped with a gall-wing door assembly according to the preferred embodiment of the present invention;

Fig. 2 is a plan view, partly in section, of the vehicle of Fig. 1;

Fig. 3 is a perspective view of the whole part of a vehicle frame structure of the vehicle of Fig. 1;

Fig. 4 is a side view of the whole part of the vehicle of Fig. 1;

Fig. 5 is a perspective view of the front part of the door assembly of Fig. 1;

Fig. 6 is a perspective view of the whole part of the door assembly of Fig. 1;

Fig. 7 is a partial longitudinal sectional view of the vehicle of Fig. 1;

Fig. 8 is a sectional view taken along line VIII - VIII of Fig. 7;

Fig. 9 is an explanational schematic drawing showing the positional relation between the axis of rotation symmetry of a windshield and a pivot shaft of a wiping mechanism of Figs. 5 and 8, respectively;

Fig. 10 is a view similar to Fig. 6, showing a modified example of the windshield and wiping mechanism;

Fig. 11 is a sectional view taken along line XI - XI of Fig. 4;

Fig. 12 is a sectional view taken along line XII - XII of Fig. 4;

Fig. 13 is a sectional view taken along line XIII - XIII of Fig. 4;

Fig. 14 is a sectional view taken along line XIV - XIV of Fig. 12;

Fig. 15 is a sectional view taken along line XV - XV of Fig. 14;

Fig. 16 is a perspective bottom view of a fuel-tank accommodation chamber of Fig. 2, as viewed from an under point off to the left front;

Fig. 17 is a perspective view from rear of the front part of a vehicle body, as the door aseembly is opened; and

Fig. 18 is a sectional view of a door assembly not according to the present invention.

Referring first to Fig. 1, designated at reference numeral 1 is a body of a vehicle. The vehicle body 1 has in the front part thereof an engine room portion 2 located in the central part thereof and a pair of front road wheels 5, 5 and in the rear part thereof a pair of rear road wheels 6, 6. Moreover, the vehicle body 1 has in the front part thereof a pair of front fender portions 3, 3 disposed either at the left and right thereof and each respectively projected sidewardly of the vehicle so as to hang over one of the front wheels 5, 5. Substantially in the longitudinally central part of the vehicle body 1, there is located a cockpit 4. To cover from above the cockpit 4, the vehicle body 1 is provided with a door assembly 8 hinged to be pivotable about a later-described horizontal hinge shaft disposed at the hidden or right side of the vehicle of Fig. 1, the door assembly 8 including as an integral part thererof a substantially fusiform windshield 9 adapted so as to extend over the cockpit 4, from the front to the rear, when the door assembly 8 is closed, and a wiping mechanism 10 for wiping the windshield 9. To provide the vehicle body 1 with a favorable aerodynamic characteristic, the door assembly 8 has at the left side thereof a bulged portion 7 constituting a part of the left side of the vehicle together with one of the front fender portions 3, 3 in a continuous or streamlined manner.

Referring now to Fig. 2, at the right side of the cockpit 4, there is provided an enclosable fuel-tank accommodation chamber 15 for accommodating therein a fuel tank 16, the accommodation chamber 15 being located in and defined by a bulged portion 22 forming a part of the right side of the vehicle together with the other of the front fender portions 3, 3 in a continuous or streamlined manner. The bulged portion 22 comprises an inner plate 11 interposed between the cockpit 4 and the accommodation chamber 15 to separate them from each other, an outer plate 12 constituting the outer side wall of the bulged portion 22, and front and rear plates 13, 14 forming the front and rear walls of the accommodation chamber 15, respectively. Between the outer plate 12 and the fuel tank 16, there are disposed a plurality of mount members 17 for supporting the fuel tank 16. In front of the front plate 13 is provided a ventilation inlet 18. According to the foregoing arrangement, in which a fuel tank is disposed in a bulged portion, making effective use of the inner space of the bulged portion, the vehicle is permitted to have the center of gravity thereof shifted frontwardly to thereby raise the cornering characteristic.

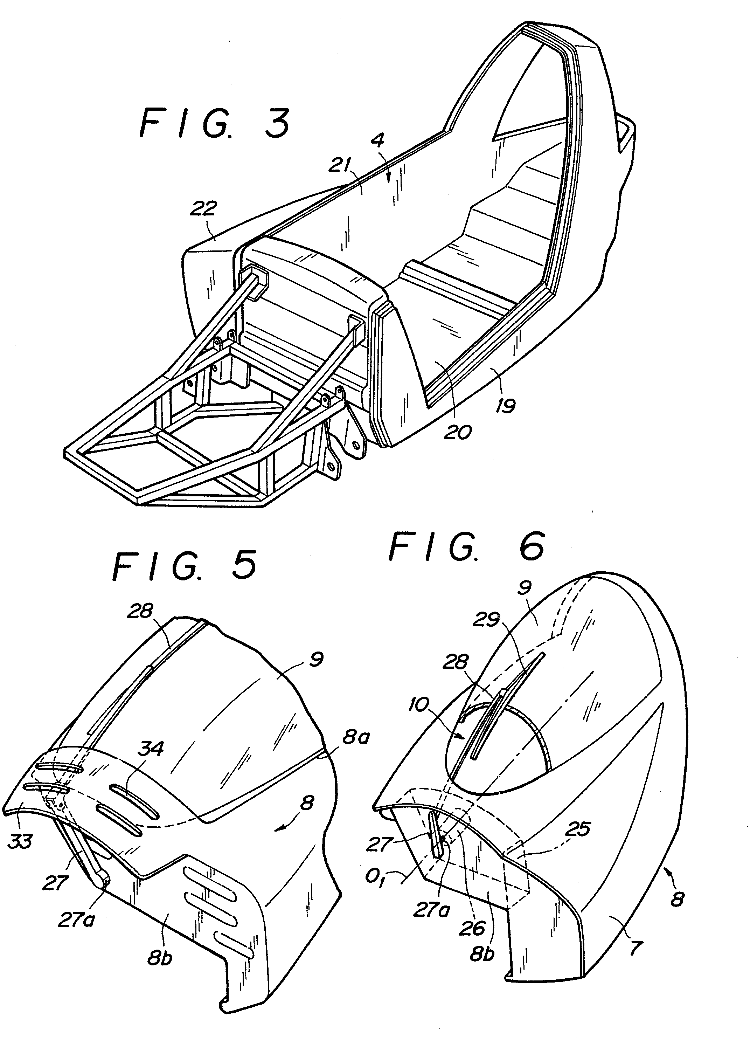

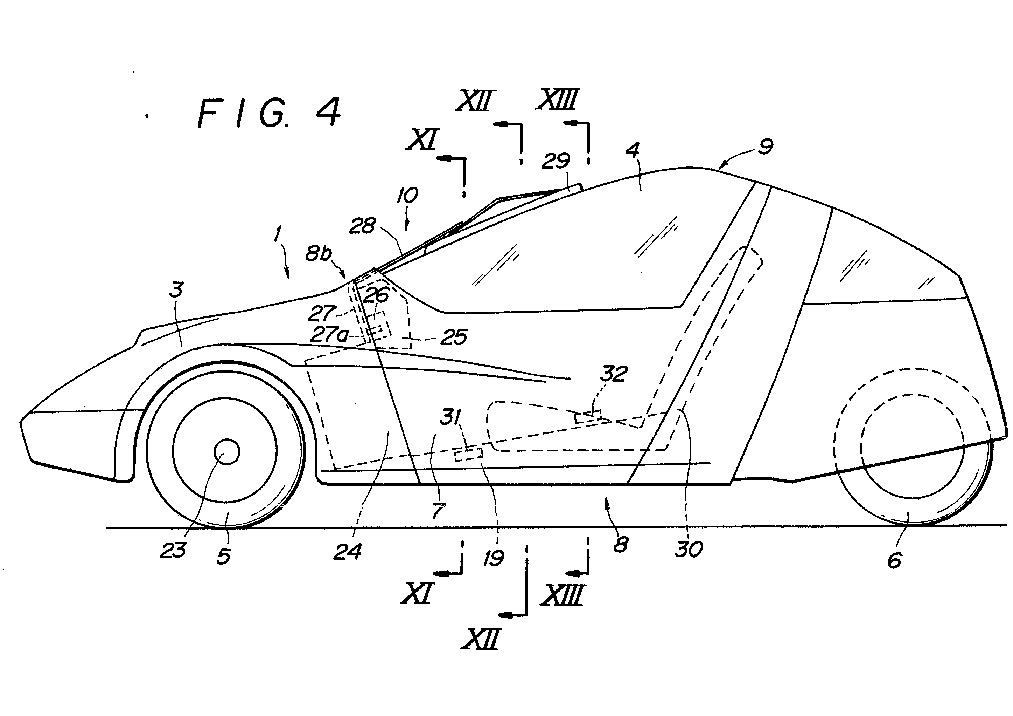

Referring now to Fig. 3, the vehicle has a cage-like vehicle frame of a semi-monocock structure having at the left side thereof a side sill 19, on which the door assembly 8 is to abut at the lower edge thereof when closed, at the right side thereof a side member 21 provided with the bulged portion 22, and a floor portion 20 extending therebetween.

Referring now to Fig. 4 showing the entire left side view of the vehicle, the front wheels 5, 5 disposed either at the left and right of the vehicle are each respectively connected through an axle 23 to an engine (not shown). Between the left front wheel 5 and the door assembly 8 as closed, inside of the left side of the vehicle body 1, there is provided a glove compartment 24. The wiping mechanism 10 comprises a wiper motor 26 accommodated in a box member 25 located inside of a front end portion 8b of the door assembly 8, a pivot shaft 27a coupled at the rear end thereof with the wiper motor 26 and projected at the front end thereof frontwardly of the front end portion 8b, a wiper arm 27 secured at the lower end thereof substantially perpendicularly to and pivotable integrally with and about the pivot shaft 27a, a wiper blade member 28 connected at the front end thereof to the upper end of the wiper arm 27 so as to be pivotable in a plane including the wiper arm 27 and extending substantially longitudinally of the vehicle and movable for wiping substantially over the entire width of the windshield 9, and a rubber member 29 supported by the rear end of the wiper blade member 28 and brought in slidable contact with the windshield 9.

Moreover, in the cockpit 4 is disposed a driver's seat 30 of a well-known type.

Further, at the cockpit 4 side of the bulged portion 7 of the door assembly 8, there are arranged an interior light 32 right above the upper edge of the side sill 19 and a limit switch 31 near the lower edge of the bulged portion 7, along which the bulged portion 7 engagingly abuts on the side sill 19, the limit switch 31 being adapted for the make and break of a circuit (not shown) of the light 32.

Referring now to Fig. 5, the door assembly 8 has at the upper front end thereof a cowl 33 formed thereon for protecting a pivotal interconnection between the wiper arm 27 and the wiper blade member 28 and for preventing the intrusion of dust between the front end portion 8b of the door assembly 8 and the vehicle body 1, the cowl 33 having a plurality of inspection holes 34 formed therethrough. The windshield 9 constituting an integral part of the door assembly 8 is fitted in an opening 8a formed through the upper part of the door assembly 8.

Referring now to Fig. 6, which is a perspective view showing the entire part of the door assembly 8, partly in section to facilitate seizing the configuration of the windshield 9, the pivot shaft 27a of the wiper arm 27 is arranged to be substantially coincident with an axis $O_1$ of rotation symmetry as the centerline of the windshield 9 which is substantially fusiform. As easily seen from Fig. 6, to the wiper arm 27 fixed substantially perpendicularly to the pivot shaft 27a, the wiper blade member 28 is connected to be pivotable in a plane including the wiper arm 17 and extending longitudinally of the vehicle as described before, thus permitting the rubber member 19 to be kept in slidable contact with the windshield 9 with a substantially constant contact angle, thereby achieving a favorable wiping function.

On the other hand, the box member 25 is disposed at the cockpit 4 side of the front end portion 8b of the door assembly 8 and so configured as to be substantially consistent with such part of the front end portion 8b that has excluded the bulged portion 7. Namely, the box member 25 is given a corresponding width in the transverse direction of the vehicle and hence favorably adapted to serve as a reinforcing member for the front end portion 8b of the door assembly 8, while concurrently contributing to achieving a light-weighted design.

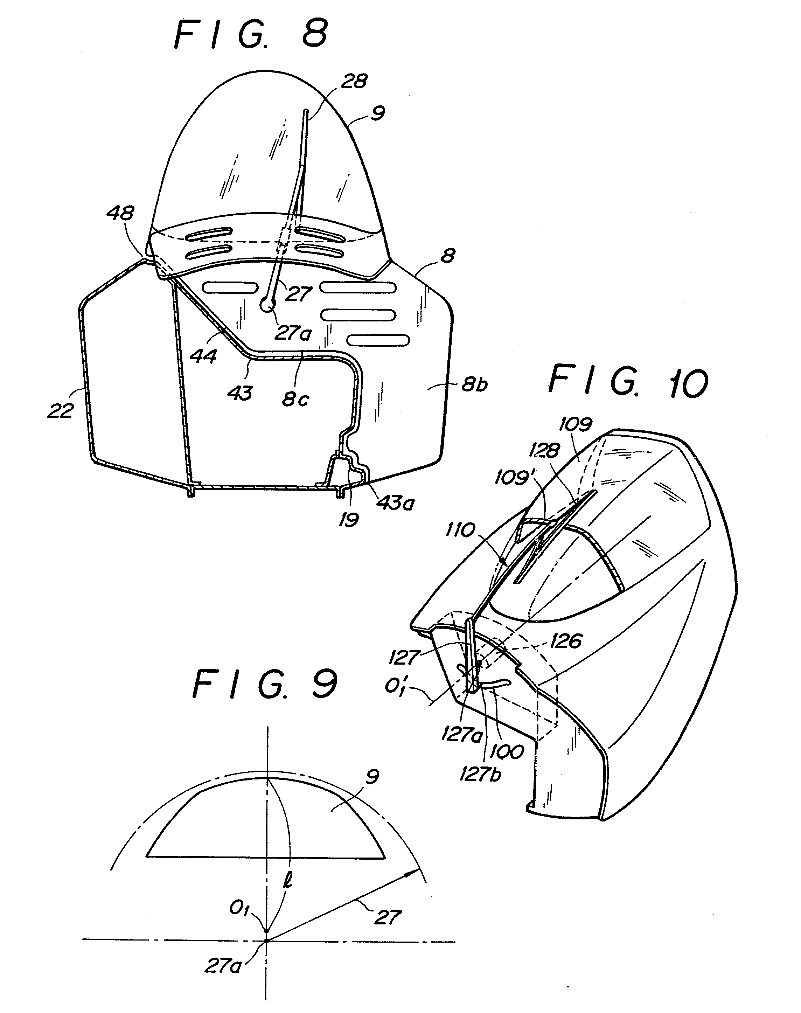

Incidentally, there will be described later with reference to Fig. 9 the positional relation the pivot shaft 27a of the wiper arm 17 has with the axis $O_1$ of rotation symmetry of the windshield 9 when viewed from front of the vehicle.

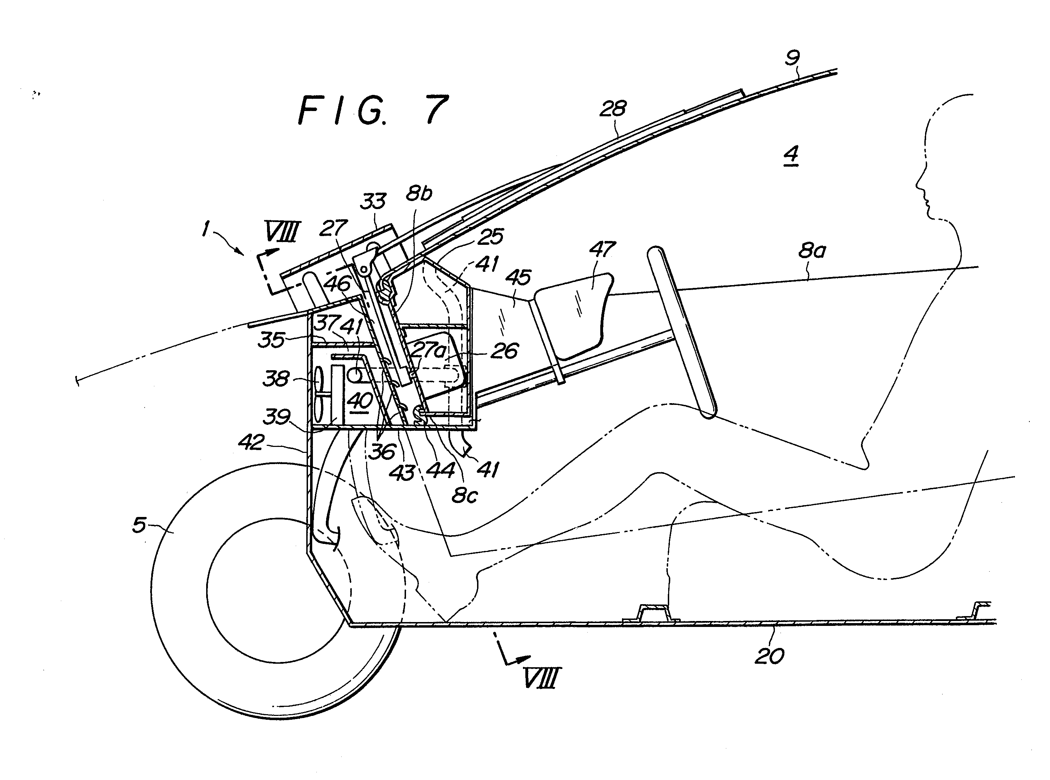

Referring now to Fig. 7, which is a longitudinal sectional view showing the positional relation between the front part of the door assembly 8 and the vehicle body 1, a heater unit 35 is provided inside of the vehicle body 1 just before the front end portion 8b of the door assembly 8. The heater unit 35 has an inner space 40 defined at the front boundary thereof by a front end wall 42 of the cockpit 4 and at the bottom boundary thereof by a horizontal partition wall 43 disposed substantially at the same level as the bottom wall of the box member 25 in the front part of the cockpit 4. In the inner space 40, there is installed a heat exchanger 39 mounted on the partition wall 43 and provided with an air fan 38 adapted to force air introduced from a plurality of air inlets 36 and conducted through a communication path 37 into the inner space 40. For the communication with the cockpit 4, the inner space 40 has a communication pipe 41 leading therefrom, while detouring toward the right side of the vehicle body 1, to the cockpit 4. The air forced into the space 40 is heated by the heat exchanger 39 and supplied through the communication pipe 41 to the cockpit 4.

The box member 25 is interposed between the front

- 12 -

end portion 8b of the door assembly 8 and an instrument panel 45 having a plurality of instruments 47 incorporated in the rear part thereof, thus achieving an effective use of the space, while successfully contributing to the provision of high rigidity for the front end portion 8b of the door assembly 8.

Moreover, the cowl 33 favorably prevents the dust intrusion into a gap 46 between the front end portion 8b of the door assembly 8 and such part of the vehicle body 1 that contains the heater unit 35.

Further, along the entire length of a lower edge part 8c of the front end portion 8b of the door assembly 8 confronting the partition wall 43 is attached a seal rubber 44 abutting on the partition wall 43, whereby water drops entering the gap 46 can be effectively removed out of the vehicle body 1.

Referring now to Fig. 8, which is a sectional view of the entire front end portion 8b of the door assembly 8 taken along line VIII - VIII of Fig. 7, the lower edge part 8c of the front end portion 8b is so configured as to extend from an upper edge part 48 of the bulged portion 22, on which the later-described hinge shaft of the door assembly 8 is disposed, in a descending manner toward the right part of the vehicle body 1 to a position below the pivot shaft 27a of the wiper arm 27, at which it is deflected to be horizontal and from which it extends transversely horizontally as far as it reaches another position above a lower edge part 43a of the partition wall 43 costituting the front part of the side sill 19, where it is bent to extend downwardly to the lower edge part 43a. The seal rubber 44 attached to be stretched over the entire length of the lower edge part 8c of the front end portion 8b of the door assembly 8 is brought into tight contact with the partition wall 43 when the door assembly 8 is closed.

Referring now to Fig. 9, the wiper arm 27 has a length substantially equal to the maximum distance $\ell$

between the axis of rotation symmetry of the windshield 9 and the peripheral surface thereof, while the pivot shaft 27a of the wiper arm 27 is disposed to be substantially coincident with the axis $O_1$ of rotation symmetry. Such arrangement favorably enables the wiper blade member 28 to keep substantially constant the contact angle it makes with the windshield 9, thus permitting an effective wiping of the windshield 9 substantially over the entire width thereof.

In the foregoing arrangement, when the door assembly 8 is hinged to be opened counterclockwise in front view up to a vertical position thereof, also the windshield 9 forming an integral part thereof will travel together therewith, causing the cockpit 4 to be opened at the left by a wide angle spannng over a right angle, thus facilitating the driver's action to get on and off the vehicle. In this respect, in a different arrangement in which a wiping mechanism for a windshield is mounted at the side of a vehicle body, there is needed a removal means for removing a wiper blade member of the wiping mechanism from the windshield when opening and closing a door assembly. However, in this embodiment, the wiping mechanism 10 is integrally assembled in the door assembly 8, thus permitting the wiper blade member 28 to move integrally with the windshield 9, without the need of removal means.

Moreover, in the embodiment, both the water wiped off from the windshield 9 by the wiping mechanism 10 and water drops having passed the cowl 33 are not admitted, even when having entered the gap 46 between the heater unit 35 and the front end portion 8b of the door assembly 8, to penetrate into the cockpit 4, which is sealed with the seal rubber 44 in an air- and watertight manner against the gap 46; while being favorably guided along the partition wall 43, which is so configured as to descend as shown in Fig. 8 from the upper edge part 48 of the bulged portion 22 continuously toward the side sill 19, to the lower edge part 43a thereof, where they are discharged out of the vehicle body 1.

Referring now to Fig. 10, relative to the foregoing embodiment, there may be employed a modified example for a door assembly including a windshield 109 with a para-arcuate section 109' and a wiping mechanism 110 having a wiper arm 127 and a wiper blade member 128, in which example a pivot shaft 127a of the wiper arm 127 is disposed to be substantially coincident with the center axis $O_1'$ of symmetry of the para-arcuate section 109', and the wiper arm 127 has at the lower end thereof a projection 127b projected therefrom rearwardly and engaged with a cam groove 100 formed in the front wall of the door assembly with a configuration matched to that of the section 109'. According to this arrangement, as the pivot shaft 127a is driven to revolve with a wiper motor 126 while alternating the rotating direction, the wiper blade member 128 moves along the windshield 109, keeping substantially constant the angle it makes with the para-arcuate section 109', thus achieving an effective wiping of the windshield 109 substantially over the entire width thereof.

Referring again to Figs. 3 and 4, the side sill 19 is given at the front end thereof a level slightly higher than the upper surface of the floor portion 20 as shown in Fig. 3 and contoured so as to gradually ascend rearwardly, reaching at the rear end thereof to a level somewhat higher than the seating surface of the driver's seat 30, as shown in Fig. 4, to thereby facilitate the driver's action to get on and off the vehicle.

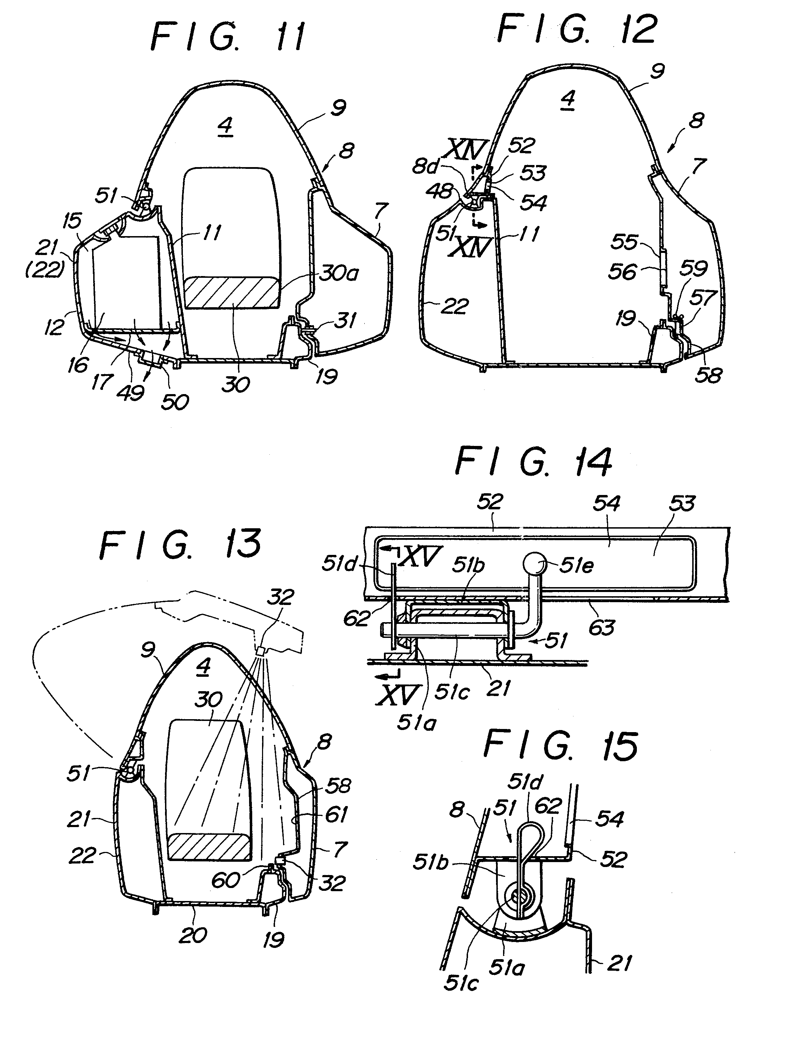

Referring now to Fig. 11, the side sill 19 is located substantially right under the left side face 30a of the driver's seat 30, thus successfully achieving an improved easiness for the driver to get on and off the vehicle in comparison with arrangements such as of the side sill 504 of Fig. 18.

Moreover, while the vehicle is traveling, the air introduced from the ventilation inlet 18 shown in Fig. 2 into the fuel-tank accommodation chamber 15 is conducted, making use of the negative pressure the outside air has produced when flowing alongside the lower surface of the vehicle body 1, along arrows shown in Fig. 11 to the outside of the vehicle body 1 from a ventilation outlet 50 formed in a bottom part 49 of the bulged portion 22 of the vehicle body 1, while such a ventilation outlet may be formed in the bottom part of the side member 21 of the vehicle frame.

Incidentally, as mentioned before, the door assembly 8 is adapted to be pivotable about a horizontal hinge shaft 51 directed longitudinally of the vehicle, the hinge shaft 51 being interposed between the door assembly 8 and the upper end of the side member 21. On the other hand, as seen from Fig. 11, the limit switch 31 is disposed at the cockpit 4 side of such part of the bulged portion 7 of the door assembly 8 that is brought in an engaging contact with the side sill 19. When the door assembly 8 is opened, the limit switch 31 closes, causing, as will be again described with reference to Fig. 13, the interior light to be lit, illuminating the interior of the cockpit 4, particularly in the vicinity of the side sill 19 over which the driver steps to get on and off the vehicle.

Referring now to Fig. 12, which is a sectional view from front of the vehicle taken at a position slightly rearwardly shifted from that of Fig. 11, the hinge shaft 51 of the door assembly 8 is interposed between the upper edge part 48 of the bulged portion 22 at the right side of the vehicle body 1 and a right lower edge part 8c of the door assembly 8. As will be again described later, the hinge shaft 51 is formed, at the location point thereof, on a side frame 52 at the cockpit 4 side of the door assembly 8 and adapted to be removable from inside of the cockpit 4 through an access hole 54 normally closed with a seal tape 53. On the outside of the side sill 19, there is attached a door lock member 57 for locking the door assembly 8 as closed, the door lock member 57 being adapted to be detachable by means of a wing nut 59 disposed in a door inside panel 58. Similarly to the case of the hinge shaft 51, the wing nut 59 is formed, at the location point thereof, on the door inside panel 58 and adapted to be adjustable through an access hole 56 normally closed with a seal tape 55.

Referring now to Fig. 13 showing a sectional view from front of the vehicle taken at a position further rearwardly shifted from that of Fig. 12, at which position the vehicle has a transverse width thereof narrower than those at respective positions of Figs. 11 and 12, the door inside panel 58 has around that position of the vehicle a recessed portion 61 recessed in the transversely outward direction thereof to thereby increase the effective space of the cockpit 4. The interior light 32 is arranged on the inside panel 58 of the door assembly 8 so as to come just above an upper edge part 60 of the side sill 19, when the door assembly 8 is closed as shown by solid line, and to illuminate the interior of the cockpit 4, including the driver's seat 30 and particularly in the vicinity of the side sill 19 as a threshold part for the driver stride to get on and off the vehicle, when the door assembly 8 is moved by pivoting about the hinge shaft 51 upwardly to a predetermined open position thereof shown by imaginary line, i.e. alternate long and two short dashes line. The interior light 32 as well as the limit switch 31 is connected to an electric power source (not shown) such as a battery disposed inside of the engine room portion 2 of the vehicle body 1, through a wiring harness (not shown) entering the door assembly 8 in the vicinity of the hinge shaft 51 and extending via the inside of the front part of the door assembly 8 to related electrical appliances. As can be easily understood from the foregoing description, the interior light 32 is disposed in such area that is unvisible from outside of the vehicle when the door assembly 8 is closed, to thereby avoid marring the appearance of the vehicle.

Referring now to Fig. 14, which is a sectional view taken along line XIV - XIV of Fig. 12 to show the structure in the vicinity of the hinge shaft 51 of the door assembly 8, the side member 21 of the vehicle frame has a bracket 51a secured thereto on one side and the side frame 52, which is fixed to the right lower edge part 8d of the door assembly 8, has another bracket 51b secured thereto and fitted tight on the bracket 51a on the other side. The hinge shaft 51, configured substantially in the form of letter L, has its relatively long stem part 51c removably inserted to be fitted in respective through holes formed in both the bracket 51a on the side member 21 side and the bracket 51b on the door assembly 8 side, thereby pivotably connecting the latter to the former and hence the door assembly 8 to the side member 21. Moreover, the hinge shaft 51 has at the rear end of the stem part 51c a relatively short arm part thereof adapted to serve as an operation lever 51e and directed so as to extend passing through an elongate hole 63, which is opened in the side frame 52 and elongated longitudinally of the vehicle to span a longitudinal length substantially equal to the stem part 51c, whereby the distal end of the arm part, i.e. the grip of the operation lever 51e, is located to be found aside the access hole 54 opened in the side frame 52. Further, the hinge shaft 51 has at the front end of the stem part 51c a check pin 51d removably inserted therethrough, the pin 51d having a predetermined length to extend through another hole 62 opened in the side frame 52 and confront at the distal end thereof the access hole 54. The hinge shaft 51 as put in a normal state thereof shown in Fig. 14 is, therefore, unable to remove from the brackets 51a, 51b.

Referring now to Fig. 15, as illustrated therein into detail, the check pin 51d is so configured as to permit a person in the cockpit 4 to remove from the stem part 51c of the hinge shaft 51 by fingers through the access hole 54. Accordingly, the removal of the hinge shaft 51 is effectable by the steps of firstly peeling off from inside of the cockpit 4 the seal tape 53 to thereby enable access into the access hole 54, then pulling out the check pin 51d from the step part 51c through the access hole 54, and finally shifting the operation lever 51e rearwardly along the elongate hole 63 to remove the hinge shfat 51 from the brackets 51a, 51b.

Referring now to Fig. 16, which is a perspective bottom view of the fuel-tank accommodation chamber 15 as viewed from an under point off to the left front, the upward and frontward directions of the vehicle are represented by big arrows U and F, respectively. The ventilation outlet 50 and the ventilation inlet 18 are protected with cover pieces 64 and 65, respectively, which are open rearwardly and downwardly, respectively. When the vehicle is traveling, air is thus favorably permitted to flow into the inlet 18 and out of the outlet 50, thereby constantly effecting the ventilation of the fuel-tank accommodation chamber 15, while the intrusion of water drop into the accommodation chamber 15 is effectively obstructed by the cover pieces 64, 65.

Referring now to Fig. 17, the glove compartment 24 in the vehicle body 1 is interposed between the door assembly 8 and the left front wheel 5 as described before and opened in such surface of the left front fender portion 3 that is brought into abutment with the door assembly 8 when this is closed, while there may be employed a glove compartment opened in such surface of the vehicle body 1 that partially defines the cockpit 4, to permit an access thereto from the cockpit 4.

Although there has been described what is at present considered to be the preferred embodiment of the invention, it will be understood that the present invention may be embodied in other specific forms without departing from the spirit or essential characteristics thereof. The present embodiment is therefore to be considered in all respects as illustrative and not restrective. The scope of the invention is indicated by the appended claims rather than by the foregoing description.

CLAIMS:

1. A door assembly, upwardly pivotable, for a vehicle including a vehicle body having a cockpit, comprising as an integral part thereof a windshield covering said cockpit from the front to the upper rear thereof and as another integral part thereof wiping means for wiping said windshield.

2. A door assembly according to Claim 1, wherein said windshield has a substantially fusiform configuration with the axis of rotation symmetry thereof extending longitudinally of said vehicle.

3. A door assembly according to Claim 2, wherein said door assembly is pivotable about a hinge shaft arranged longitudinally at one side of said vehicle body to provide a step way at the other side of said vehicle body.

4. A door assembly according to Claim 3, wherein said wiping means comprises a wiper motor disposed inside of a front end portion of said door assembly, a wiper pivot shaft operatively connected to said wiper motor and frontwardly projected at least at the front end thereof from said front end portion of said door assembly, and wiper blade means operatively jointed with said front end of said wiper pivot shaft.

5. A door assembly according to Claim 4, wherein said wiper pivot shaft is arranged to be substantially coincident with said axis of rotation symmetry of said windshield, and said wiper blade means comprises a wiper arm attached at one end thereof substantially perpendicularly to said wiper pivot shaft, said wiper arm having a length substantially equal to the maximum distance between said windshield and said axis of rotation symmetry, and a wiper blade member pivoted on the other end of said wiper arm so as to be pivotable in a plane including said wiper arm and extending longitudinally of said vehicle.

6. A door assembly according to Claim 5, wherein said door assembly is provided with a side sill formed at said opposite side of said vehicle body to be brought into engaging abutment with a lower edge part at said cockpit side of said door assembly, and between said front end portion of said door assembly and a joint surface portion of said vehicle body facing said front end portion thereof is interposed seal means continuously descending from a part of said door assembly in the vicinity of said hinge shaft to said side sill, detouring from under said wiper pivot shaft.

7.    A door assembly according to Claim 4, wherein said wiper means further comprises a box member disposed in said front end portion of said door assembly to accommodate at least said said wiper motor and given a predetermined width in the transverse direction of said vehicle.

8.    A gall-wing door assembly for a vehicle including a vehicle body, a pair of front road wheels suspended from the front part of said vehicle body, and a single rear road wheel suspended from the rear part of said vehicle body, said vehicle body having a pair of front fender portions each respectively bulged transversely of said vehicle to hang over one of said front road wheels, a cockpit disposed substantially in the longitudinally central part thereof, said cockpit being provided with a floor portion, and a driver's seat disposed in said cockpit and given a predetermined transverse width, wherein said door assembly is adapted to cover said cockpit and to be vertically pivotable about a hinge shaft directed longitudinally and disposed at one side of said vehicle body to provide a step way at the opposite side thereof, said door assembly has at said opposite side of said vehicle body a bulged portion bulged transversely and configured to be continuous with one of said front fender portions when said door assembly is closed, said door assembly is provided with a side sill disposed at said opposite side of said floor portion of said cockpit so as to engagingly abut on a lower edge part at said cockpit side of said bulged portion, and said side sill is disposed substantially right under a side edge part at said opposite side of said driver's seat.

9. A door assembly according to Claim 8, wherein said side sill is arranged to be slightly higher at the front end thereof than the upper surface of said floor portion and configured so as to gradually ascend rearwardly of said vehicle.

10. A door assembly according to Claim 9, wherein said hinge shaft of said door assembly comprises a shaft member inserted between a part of said door assembly and a part of said vehicle body so as to be removable from inside of said cockpit.

11. A door assembly according to Claim 8, wherein said bulged portion of said door assembly is provided at said cockpit side with an interior light.

12. A door assembly according to Claim 11, wherein said bulged portion of said door assembly has a limit switch provided for said interior light on a part at said cockpit side thereof engagingly abutting said side sill.

13. A door assembly according to Claim 8, wherein a glove compartment is provided inside of one of said front fender portions at said opposite side of said vehicle body, between one of said front raod wheels and said door assembly.

FIG. 1

FIG. 2

FIG. 3

FIG. 5

FIG. 6

FIG. 4

XII XIII

XI

29 4 9

10

1 28

8b

26

27 25

27a

32

31 24 7 19 8 30

23 5

XI

XII XIII

XII

3/7

0124373

FIG. 7

F I G. 8

F I G. 10

F I G. 9

0124373

6/7

F I G. 11

<u>4</u>
9
8
51
15
21
(22)
11
7
30a
12
31
16
17 49 50 30 19

F I G. 12

<u>4</u>
9
8
7
XV 52
8d 53
48 54
51
XV 11
55
56 59
22 57
19
58

F I G. 13

32
9
<u>4</u>
30
8
51
58
21
61
22
7
60 32
20 19

F I G. 14

52 54 53
51d XV 51b 51e
62 51
51c 21 63
XV
51a

F I G. 15

51d
8 51 62 54
51b 52
21
51c 51a

0124373

F I G. 16

F I G. 17

F I G. 18